# EUROPEAN PATENT APPLICATION

(11) **EP 2 135 532 A1**
(43) Date of publication of application: **23.12.2009**
(21) Application number: 08011096.8
(22) Date of filing: 19.06.2008
(51) Int. Cl.: A47J 27/04

(54) **Food processor**

(71) Applicant: Grifé de Pascual, José Manuel, 08034 Barcelona (ES)
(72) Inventor: Grifé de Pascual, José Manuel, 08034 Barcelona (ES)
(74) Representative: Isern-Jara, Jaime

(57) **Abstract**

Food processor, designed to make easy the fulfilment of operations for foodstuffs conditioning and the preparation of dishes for cooking and table service, characterized in that it comprises a tabletop body formed with a lower supporting base (B), an upper panel (5) with two functional buttons (1,6) and a front zone (23) for controlling the operative functions of the internal devices of the machine.

## Description

### Object of the invention

The present invention relates to a food processor, designed to facilitate the tasks of food conditioning and preparation of meals.

### Filed of the invention

Is the fabrication of electrical appliances, especially the ones designed to help the housewives in their labours related to preparation of the ready to served dishes.

### Background of the invention

There are known different types of appliances designed to process food prior to meal preparation, with the aim to simplify the work of the persons regularly or occasionally dedicated to said occupation, with the aim to obtain functionally nutrient and at the same time esthetical and attractive dishes.

The known till now food processors are generally very complex in use and functioning, therefore they result less practical. Their use often results complicated, especially in case of some elder housewives, and at the same time their functioning is relatively slow because of the number of combined operations that are required.

So there is a need for a food processor of relatively simple structure and functioning, suitable for people having no special culinary skills and who are in need of daily or occasional preparation of meals having diverse characteristics in a reasonably short period of time.

### Brief description of the invention

The present invention is directed to a culinary appliance which can selectively perform the functions such as boiling, steam cooking, stewing, baking, warming up and the like. The appliance can be previously programmed and also it is intelligent, since it can automatically change the cooking temperature in order to avoid obtaining of raw or excessively cooked dishes (burned).

What is more, the new food processor enables homogenous cooking of food, thanks to a three-dimensional cooking system which intensifies the taste and nutritional values.

An important characteristic of the new cooking appliance is its frying ability, what advantageously distinguishes said appliance from other available equipment, also called food processors, but not permitting said culinary function.

In order to facilitate its explanation, the present invention is further illustrated by the following, nonlimiting figures, where it has been shown one possible embodiment of the improved food processor, as described in the appended patent claims.

### Brief description of the figures

Figure 1 represents a view of a disassembled appliance, showing internal composition of the appliance with reference to its functional structure.
Figure 2 shows an operating scheme of the electric devices forming a part of the new cooking appliance.

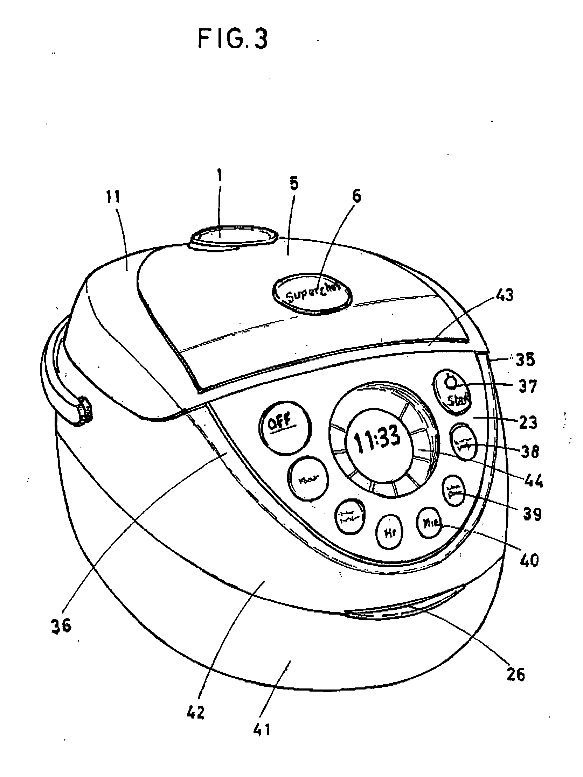

Figure 3 shows an outer view of a preferred embodiment of the new food processor.

### Detailed description of the invention

The elements designated with numerical indications from the drawings correspond to the parts as indicated afterwards.

The food processor, as described, consists in a curved desktop body and has a pleasant appearance, as a result of a refined industrial design. It comprises a flat lower base (B) as a support on a flat surface, such us a table or a marbletop, a front area containing all control means for its use, and a back handle which facilitates its displacement when necessary, provided that its volume and weight are reasonably reduced.

In addition to the physical structure (hardware), which characterizes the new culinary appliance and being the object of the following description, there is included an original programming system (software) based on the associated electric and electronic devices allowing performance of different functions which can be carried out by the appliance.

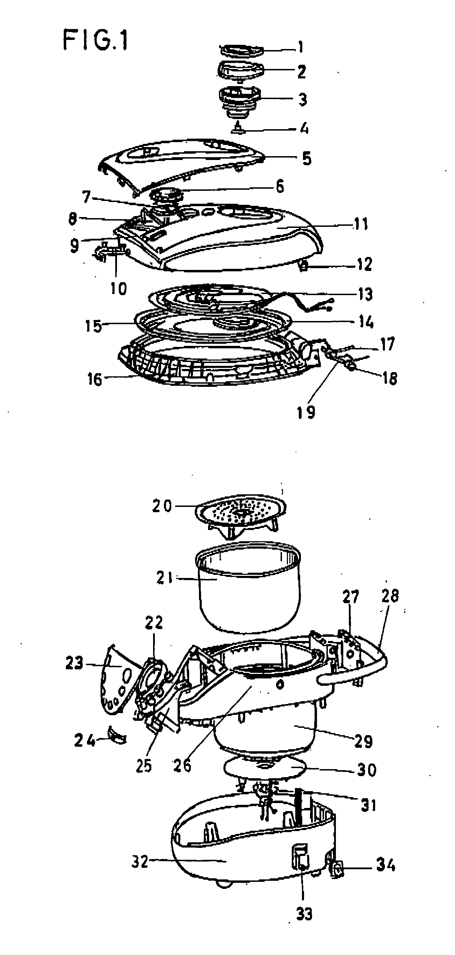

With reference to the figure 1, the upper disc 1 covers the lid 2 of a device relating to steam generated during the functioning, as well as a base 3, while the valve 4 allows the controlled passage of steam and constitutes a safety element.

The panel 5 serves as a decoration element for the upper lid of the appliance body, and contains said disc 1 projecting from its upper-back part and other disc 6 projecting from its front part.

The disc 6 covers the knob 7 provided to facilitate the opening of the processor body by means of swinging of the upper lid 11, having associated a spring 8, a balance element 9 and a sliding catch 10 for retaining of the lifted lid.

First thermoelectric heating element 13, having circular form and being situated in the internal upper part, is associated with a closure ring 14, a base panel 15 retaining the heat generated by second electric heating element having adjacent an inner lid 16, as well as right articulated spring 17 and left articulated spring 18, associated with a jointed shaft 19.

Cooking of the food with the use of steam is carried out with the aid of the multi-perforated disc 20 functionally situated at the bottom of the inner container 21 where said products are placed.

Printed electric circuit panel 22 is adjacent to the front control panel 23, below which there is provided frontal decorative element 24. Said panel 22 is supported with the use of a support 25.

Central part 26 of the appliance housing supports, in its frontal region, previously cited panel 22 and in its back region, an articulated hinge 27 and a handle 28, while the outer container 29 receives the container 21 for food being processed. Plate 30 forms third heating element and is associated with the main thermostat 31, formed by a sensor situated at the bottom of the appliance body.

Lower part 32 of the housing of the appliance is provided in its external part with a grip 33 for a spoon (not shown) and with a base of female connector 34 for a power supply cable (not shown).

The control panel 23 in the frontal section comprises switches 35 to switch on, 36 to stop, 37 to select the meals, 38 to select the time of cooking, 39 and 40 to set minutes and hours of functioning, 41 of the programming clock and 42 for selection of the menu of operations. In the central part of the panel 23 there is provided a circular region 43, having a border of sectors 44 indicating different cooking operations carried out with the use of the appliance and corresponding to many other different modes of its use.

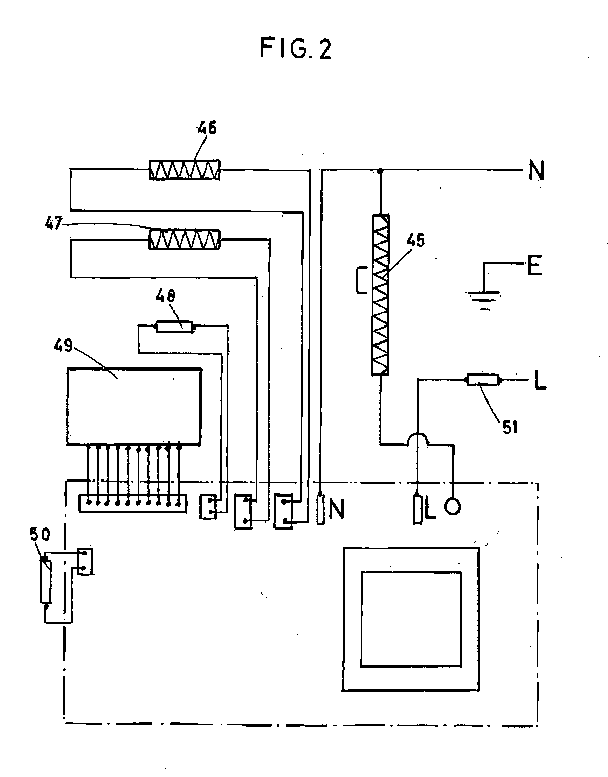

The scheme from the figure 2 shows main electric devices of the new appliance according to the invention, namely: main heater 45, side heater 46, upper heater 47, main thermostat 48, screen 49 showing graphical indications (corresponding to the circular region 43 and the sectors 44), sensor 50 associated with the cover, all of them corresponding to the components as defined above. It has also been shown a security fuse 51 and line, neutral and earth terminals L, N and E, respectively, for the power supply to the appliance.

## Claims

1. Food processor, designed to facilitate carrying out the operations of food conditioning and preparation of ready to served dishes, **characterized in that** it comprises a desktop body formed by the supporting lower base (B), the upper panel (5) having two functional knobs (1, 6) and the front area (23) for controlling operational functions of the inner devices of the appliance.

2. Food processor, according to claim 1, **characterized in that** the functional knob (1) of the upper panel (5) corresponds to a device relating to steam, and comprises the lid (2), the base (3) and the check valve (4) for the steam being generated.

3. Food processor, according to claim 1, **characterized in that** the functional knob (6) of the upper panel (5) corresponds to an opening and closing mechanism for the upper swinging lid (11) and comprising the retainer (7), the pusher spring (8), the balance element (9) and the sliding catch (10).

4. Food processor, according to claim 1, **characterized in that** the inner devices of the appliance include in its upper part first heating device (13), the elastic ring (14) for hermetic closure, the base panel (15) retaining the heat, the inner lid (16) and two springs (17, 18) associated with the jointed shaft (19).

5. Food processor, according to claim 1, **characterized in that that** the inner devices of the appliance include in its central upper part second heat generating device having a circular crown shape and being associated with the inner lid (16).

6. Food processor, according to claim 1, **characterized in that** it comprises an element in the form of the multiperforated disc (20) associated with the inner container (21) in the form of a pot destined for accommodation of the processed food, and arranged in the outer container (29), whose lower outer part is associated with third heating device (30) having a disc type shape.

7. Food processor, according to claim 1, **characterized in that** it comprises printed electric circuit panel (22) for controlling the functioning of the appliance, and being associated with the front panel (23) having control means, consisting in switches (35 to 42) corresponding to different modes of functioning of the appliance.

8. Food processor, according to claim 7, **characterized in that** the front control panel (23) includes a disc having plurality of outlying sections corresponding to different cooking operations, such as steam cooking, boiling, stewing and frying.
